# FASCICULE DE BREVET EUROPEEN

(11) **EP 1 006 748 B1**
(45) Date de publication et mention de la délivrance du brevet: **26.03.2008**
(21) Numéro de dépôt: 99402961.9
(22) Date de dépôt: 29.11.1999
(51) Int. Cl.: H04Q 11/00, H04Q 3/52, H04L 12/56, H04Q 3/00

(54) **Système de gestion des interconnexions pour éléments de réseau**
Vorrichtung zur Verwaltung von Verbindungen in Netzknoten
System for managing the interconnections within network elements

(30) Priorité: 03.12.1998 FR 9815272
(43) Date de publication de la demande: 07.06.2000
(73) Titulaire: Alcatel Lucent, 75008 Paris (FR)
(72) Inventeur: Drion, Christophe, 91190 Gif sur Yvette (FR); Chambon, Olivier, 75004 Paris (FR); Coujoulou, Philippe, 92370 Chaville (FR)
(74) Mandataire: Sciaux, Edmond

(56) Documents cités:
- JOHANSSON S: "TRANSPORT NETWORK INVOLVING A RECONFIGURABLE WDM NETWORK LAYER - A EUROPEAN DEMONSTRATION" JOURNAL OF LIGHTWAVE TECHNOLOGY, vol. 14, no. 6, 1 juin 1996 (1996-06-01), pages 1341-1348, XP000598537 ISSN: 0733-8724
- DAN TIAN: "A SOFTWARE ARCHITECTURE SUPPORTING CMIP MANAGEMENT INFORMATION BASES OF ATM SWITCHES" GLOBECOM '95. IEEE GLOBAL TELECOMMUNICATIONS CONFERENCE, SINGAPORE, NOV. 14 - 16, 1995, vol. 3, 14 novembre 1995 (1995-11-14), pages 1862-1866, XP000633611 INSTITUTE OF ELECTRICAL AND ELECTRONICS ENGINEERS ISBN: 0-7803-2510-9
- BLUME J ET AL: "CONTROL AND OPERATION OF SDH NETWORK ELEMENTS" ERICSSON REVIEW, vol. 69, no. 3, 1 janvier 1992 (1992-01-01), pages 62-77, XP000323321 ISSN: 0014-0171

## Description

L'invention concerne un système de gestion des interconnexions pour éléments de réseau.
Un système de gestion des interconnexions d'un élément de réseau comporte des moyens de gestion matériel et logiciel qui lui permettent de réaliser des chemins dans l'élément de réseau. A priori toutes les interconnexions doivent être possibles dans ledit élément de réseau.

On rappelle qu'une opération d'interconnexion est l'établissement d'un chemin dans l'élément de réseau partant d'un point de connexion en entrée de l'élément vers n'importe quel point de connexion en sortie dudit élément de réseau.
À cette fin le système de gestion doit connaître le nombre de points de connexion en entrée (fibres entrantes par exemple) et le nombre de points de connexion en sortie (fibres sortantes par exemple) de l'élément de réseau.

Malheureusement en pratique, il y a des limitations qui ne permettent pas toutes les interconnexions qui a priori peuvent sembler possibles.

Les algorithmes définissant les modèles d'information relatifs aux points de connexion d'un élément de réseau, existant aujourd'hui pour le pilotage des éléments de réseau, ne donnent pas de description pour les limitations possibles d'interconnexions pour ledit élément de réseau.

Pour l'instant ces algorithmes n'obtiennent pas l'information du réseau lui-même, mais d'une description prédéterminée forcément statique qui est fournie par le vendeur du système.

Les limitations d'interconnexion dans un élément de réseau peuvent avoir différentes raisons :
- un élément de réseau peut ne pas être capable d'interconnecter certains points de connexion (ou ports), du fait d'une limitation technologique. Par exemple, l'algorithme d'interconnexion en longueur d'onde n'est pas capable d'effectuer une interconnexion entre une fibre entrante transportant un signal à une longueur d'onde vers une fibre sortante transportant le signal à une autre longueur d'onde, du fait d'une configuration initiale du matériel qui ne peut être changée.
- un élément de réseau peut ne pas être complètement équipé. Il s'agit là d'un problème de niveau d'équipement (pour des raisons de coût) et l'interconnexion peut dès lors ne jamais être possible du fait des limitations liées à la présence de cet équipement statique,
- un élément réseau peut ne jamais être capable de supporter deux interconnexions particulières en même temps car elles nécessiteraient d'utiliser une ressource matérielle (hardware) de l'élément de réseau non partageable, (par exemple un élément de circuit nécessaire pour établir deux chemins distincts),
- un élément de réseau peut ne pas supporter une interconnexion imposée par une interconnexion antérieure. L'élément de réseau alloue des ressources internes pour supporter les interconnexions, et une interconnexion qui a eu lieu antérieurement peut conduire à une limitation d'interconnexion qui ne se serait pas produite si une allocation de ressources avait été faite dans un autre ordre.

Ce problème peut être résolu par une ré-allocation des ressources matérielles allouées aux interconnexions. Cette réalisation, appelée également réarrangement, peut ou non perturber temporairement le trafic établi dans l'élément réseau.

Les différentes limitations peuvent être identifiées de la façon suivante :
- une limitation statique des interconnexions (due au matériel ou au logiciel), l'élément réseau n'étant jamais capable d'établir certaines interconnexions,
- une limitation dynamique des interconnexions (due au matériel ou au logiciel), une capacité d'interconnexion pouvant être impossible à un instant donné du fait d'interconnexions antérieures (historique). Il y a dans ce cas une ou plusieurs solutions possibles pour permettre à nouveau la capacité d'une interconnexion, en procédant à un réarrangement.

Dans la plupart des réseaux à commutation électrique, le système de gestion utilise des données qui décrivent les caractéristiques du matériel. Le problème d'une limitation statique des interconnexions peut se poser bien sûr dans le cas où le matériel est insuffisant.
L'information d'interconnexion statique de l'élément de réseau n'est pas stockée dans l'élément réseau et le système de gestion de l'élément réseau doit obtenir cette information d'une autre base d'information (en général, un document définissant le produit en l'occurrence).

Les limitations dynamiques des interconnexions est un problème nouveau du fait qu'il provient des éléments de réseaux dont le nombre de ressources de transmission n'est pas fixe, et en l'occurrence des éléments de réseaux optiques possédant des capacités de configuration dynamiques, c'est-à-dire qui peuvent être modifiées d'un instant t à un instant t+l. Ce nouveau problème n'a pas de solution connue à ce jour.
La présente invention a pour but de résoudre ces problèmes.

Johansson S. in Journal of Lightwave Technology, vol. 14, n°6, pp1341-1348 (1996), XP000598537 décrit un système de gestion conforme au préambule de la revendication 1.
Selon l'invention, le système proposé permet au système de gestion et plus particulièrement à l'algorithme de recherche de chemin mis en oeuvre par ce système, de prendre des décisions suivant une connaissance exacte de ce qui se passe dans l'élément de réseau.
La présente invention a plus particulièrement pour objet un système de gestion des interconnexions entre les points de connexion d'un élément de réseau selon la revendication 1.

Les moyens de mise à jour de la nouvelle matrice (R2) comportent des moyens de détermination de solutions pour l'établissement d'interconnexion, ces moyens mettant en oeuvre des opérations de déconnexion d'interconnexions établies et/ou de réarrangement d'une ou plusieurs interconnexions établies et l'inscription de ces solutions pour l'objet concerné.

D'autres particularités et avantages de l'invention apparaîtront à la lecture de la description qui est faite ci-après et qui est donnée à titre d'exemple non limitatif et en regard des figures sur lesquelles :
- la figure 1, représente schématiquement un système de gestion des interconnexions selon l'invention,
- la figure 2, représente de façon schématique l'architecture de l'élément de réseau pour l'établissement du modèle et la mise à jour.

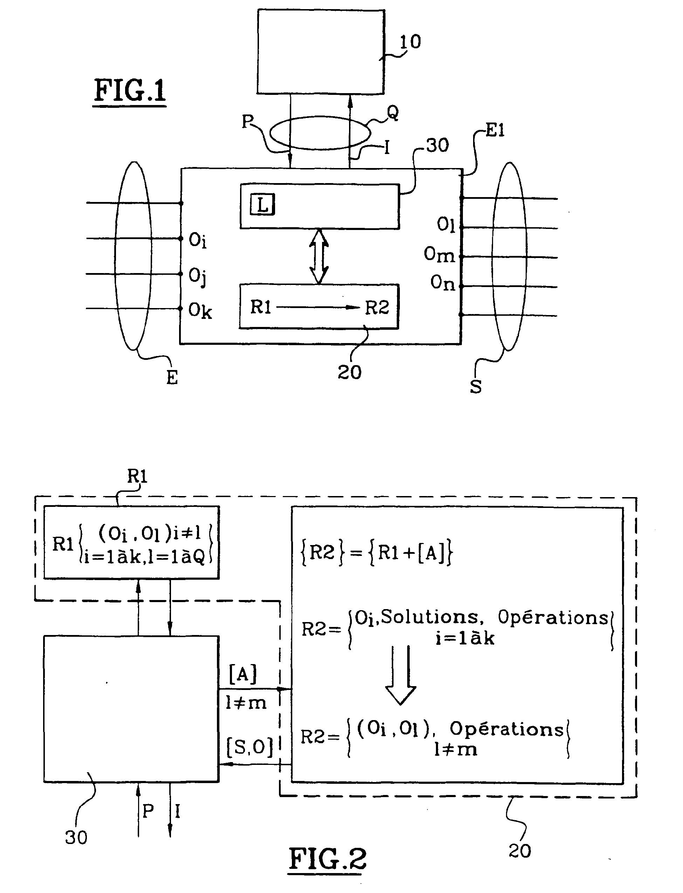

L'invention permet au système de gestion, représenté sur la figure 1, d'avoir la connaissance des solutions possibles pour pallier des situations de blocage dans un élément de réseau particulier puisque ce dernier lui fournit en l'occurrence une solution de réarrangement ainsi que les impacts de la solution adoptée (par le réarrangement) sur le trafic existant.

Les capacités d'interconnexion d'un élément de réseau sont présentées par l'élément de réseau E₁ lui-même au centre de gestion 10 des interconnexions à travers une interface de communication standard Q.

L'information présentée I est automatiquement mise à jour par l'élément de réseau qui est apte à notifier les changements au système de gestion.

Le centre de gestion 10 dialogue avec l'élément de réseau E₁ à travers l'interface Q (signal P) et est informé (signal I) par l'élément de réseau des limitations d'interconnexion en cours et des solutions possibles telles que les réarrangements (incluant l'information sur l'éventuel impact sur le trafic).

Dans l'implémentation logicielle de la solution réalisée, les points de connexion sont définis en tant qu'objets Oᵢ,Oₗ au moyen d'un langage orienté objet tel que le langage GDMO ou C++ par exemple.

Dans le cas de connexions bidirectionnelles, il n'y a pas de distinction entre les objets de départ et les objets destinataires.

Selon l'invention, l'élément de réseau E₁ entretient une base de donnée 20 contenant les limitations pour chacun des objets qui peuvent être interconnectés (tout aussi bien pour les objets de départ que pour les objets destinataires).

À cette fin, cette base de donnée contient soit une liste d'objets non alloués pour une interconnexion (Oᵢ,O₁) l≠m, Om étant déjà alloué, soit une liste contenant uniquement les objets alloués pour les interconnexions (Oᵢ,Oₘ).

Comme on la dit ci-dessus, par définition un objet de départ ne peut être interconnecté à un autre objet de départ (Oᵢ, Oₗ) i≠l, et un objet destinataire ne peut jamais être interconnecté à un autre objet destinataire. Il n'est donc pas nécessaire de décrire ces limitations dans la base de données.

Dans le cas où l'on a choisi de définir une base de donnée contenant la liste des objets non alloués :
- pour chaque objet non alloué, la base de donnée comporte une liste de solutions possibles permettant l'interconnexion. Si cette liste est vide, alors il n'y a aucune solution mis à part une augmentation des capacités du matériel.

Chaque solution possible est une séquence d'opérations à appliquer à l'élément de réseau pour permettre l'interconnexion.

L'élément de réseau E₁ maintient par conséquent une base de données sur les capacités d'interconnexion, notamment sur les interconnexions impossibles.

À cette fin, l'élément de réseau comporte un logiciel L et un circuit de commande 30 apte à mettre en oeuvre ce logiciel. Le logiciel L est apte à décrire chaque point de connexion de l'élément de réseau en tant qu'objet à partir de données initiales préalablement chargées dans une mémoire du circuit de commande, et à maintenir une base de données des limitations pour chacun des objets de ladite base.

Pour un objet donné, la base de données 20 contient la liste des objets auquel ledit objet pourra être connecté ou ne pourra pas être connecté. Cette liste est mise à jour par le logiciel au fur et à mesure des allocations, c'est-à-dire au fur et à mesure qu'un objet sera alloué à un autre pour une interconnexion.

En pratique, dans le cas de limitations statiques, si le nombre d'objets auquel un objet ne peut pas être connecté est moins grand que le nombre d'objets auquel il peut être interconnecté, c'est cette liste d'objets auquel l'objet ne pourra pas être connecté qui est stocké dans la base.

La mise à jour de la base de données initiale est donc réalisée par ce logiciel qui en outre est apte pour chaque objet, à maintenir une information relative à la cause de l'impossibilité d'interconnexion et à fournir une solution dans le cas d'une solution possible.

À cette fin le logiciel comporte un algorithme de mise à jour procédant pour un objet donné aux étapes suivantes :
- recherche des objets non alloués à une interconnexion, allocation de ces objets à l'objet pris en compte pour définir des solutions d'interconnexion,
- recherche, dans le cas où tous les objets sont alloués, de solutions de déconnexion et/ou de réarrangement et fourniture des pénalités apportées par chaque solution par rapport à une autre solution.

Parmi ces pénalités il y a le temps de réarrangement d'une interconnexion et/ou les degrés de priorité à accorder à une interconnexion selon le trafic.

L'algorithme est apte à fournir les temps de réarrangement que sont susceptibles d'introduire la ou les solutions d'interconnexion qu'il propose sur l'ensemble des interconnexions existantes à un instant donné.

On va décrire maintenant l'implémentation de l'objet de l'invention (cf. figure 2) dans le cadre du formalisme des spécifications définies pour l'interface Q3 dans lequel on utilise un modèle d'information standard ITU-T M3100.

Selon ce modèle on dispose d'une matrice d'objets initiale R₁ contenant toutes les interconnexions possibles à partir des objets origines O, et des objets destinataires O₁, |≠i dont dispose l'élément de réseau. À titre d'exemple si l'on a 5 objets origines (5 entrées) et 5 objets destinataires (5 sorties) le nombre d'interconnexions est à priori ! 5 (factorielle 5).

Selon l'invention, on enrichit cette matrice R₁ d'un attribut A pour obtenir une matrice mise à jour R₂. Cet attribut A est la liste des limitations des interconnexions.

Ainsi, la matrice initiale R₁ ou base de données initiale R₁ est modifiée pour donner la matrice R₂. La matrice R₁ est modifiée de manière à contenir l'ensemble des limitations prédéterminées dues au fait du matériel (limitations statiques) et des limitations rencontrées au fur et à mesure que de nouvelles interconnexions sont établies (limitations dynamiques).

Pour un objet Oᵢ, i=1 à K, i≠l de la matrice R₁ on associe une liste d'objets Oₗ, l=1 à Q, l≠m (Oₘ déjà alloué) auquel il peut être connecté ou selon le nombre, une liste d'objets auquel il ne peut pas être connecté.
Si la liste (O₁) est vide, il n'y a pas de solution.
Si la liste (O₁) est non vide, il y a un ensemble de solutions possibles.

Chaque solution S possible est assortie de l'ensemble des opérations O nécessaires pour mettre en oeuvre la solution.

Ces opérations sont la déconnexion d'une ou de plusieurs interconnexions établies, et/ou le réarrangement des interconnexions existantes. Lorsque l'élément de réseau reçoit le choix effectué par le système de gestion, il applique la série d'opérations nécessaires pour mettre en oeuvre la solution choisie avant de réaliser l'interconnexion.

Dans le cas d'une solution consistant en un réarrangement, on associe une information sur la durée pour opérer ce réarrangement.

L'élément de réseau E₁ transmet par le signal I les informations, solution S et opération O, au centre de gestion 10 qui peut ainsi faire son choix en connaissance de cause.

## Revendications

1. Système de gestion des interconnexions entre les points de connexion d'un élément de réseau (E₁), ledit système comprenant un élément de réseau piloté par un centre de gestion (10) et :
- des moyens (20, 30) pour l'établissement d'un modèle d'information (R₁) par l'élément de réseau à partir de données initiales et en tenant compte de limitations des interconnexions à un instant donné dans l'élément de réseau,
- des moyens (20, 30) pour la mise à jour dudit modèle d'information et,
des moyens de communication (30) du modèle d'information et de ses mises à jour au centre de gestion pour lui permettre d'établir les chemins possibles dans l'élément de réseau, **caractérisé en ce que** les moyens pour l'établissement du modèle d'information comportent :
- des moyens pour la définition de tous les points de connexion de l'élément de réseau comme des objets susceptibles d'être interconnectés, permettant d'obtenir une matrice d'objets initiale (R₁),
- des moyens pour la modification de la matrice d'objets initiale de manière à obtenir une nouvelle matrice d'objets actualisée (R₂) par rajout, pour chaque objet, de l'ensemble des objets non alloués auxquels ledit objet peut être connecté, ou de l'ensemble des objets déjà alloués auxquels ledit objet ne peut pas être connecté temporairement, et de solutions permettant l'interconnexion avec ces objets.

2. Système de gestion des interconnexions selon la revendication 1, **caractérisé en ce que** les moyens de mise à jour de la nouvelle matrice (R₂) comportent des moyens de détermination de solutions pour l'établissement d'interconnexion, ces moyens mettant en oeuvre des opérations de déconnexion d'interconnexions établies et/ou de réarrangement d'une ou plusieurs interconnexions établies et l'inscription de ces solutions pour l'objet concerné.

## Claims

1. System for managing interconnections between connection points of a network element (E₁), said system including a network element controlled by a management centre (10) and:
- means (20, 30) for establishing an information model (R₁) on the basis of initial data and allowing for limitations of the interconnections in the network element at a given time,
- means (20, 30) for updating said information model, and
- means (30) for communicating the information model and its updates to the management centre to enable it to set up paths in the network element, **characterised in that** the means for establishing the information model include:
- means for defining all connection points of the network element as objects that can be interconnected, producing an initial object matrix (R₁), and
- means for modifying the initial object matrix, by adding for each object the set of unallocated objects to which said object can be connected or the set of objects already allocated to which said object temporarily cannot be connected and solutions enabling interconnection with those objects, to obtain a new updated object matrix (R₂).

2. System for managing interconnections according to claim 1, **characterised in that** the means for updating the new matrix (R₂) include means for determining solutions for setting up interconnections using operations of disconnecting established interconnections and/or of rearranging one or more established interconnections and writing those solutions for the object concerned.

## Patentansprüche

1. Vorrichtung zur Verwaltung von Verbindungen zwischen den Koppelpunkten eines Netzknotens (E₁), wobei die genannte Vorrichtung einen Netzknoten, der von einem Verwaltungszentrum (10) gesteuert wird, sowie Folgendes umfasst:
- Mittel (20, 30) zur Erstellung eines Informationsmodells (R₁) pro Netzknoten auf der Grundlage der ursprünglichen Daten und unter Berücksichtigung der Verbindungseinschränkungen im Netzknoten zu einem gegebenen Zeitpunkt,
- Mittel (20, 30) zur Aktualisierung des genannten Informationsmodells, und
Mittel zur Übertragung (30) des Informationsmodells und seiner Aktualisierungen an das Verwaltungszentrum, um diesem zu ermöglichen, die möglichen Pfade im Netzknoten zu erstellen, **dadurch gekennzeichnet, dass** die Mittel zur Erstellung des Informationsmodells Folgendes umfassen:
- Mittel zur Definition aller Koppelpunkte des Netzknotens als Objekte, die miteinander verbunden werden können, die die Möglichkeit bieten, eine ursprüngliche Objektmatrix (R₁) zu erhalten,
- Mittel zur Änderung der ursprünglichen Objektmatrix, um eine neue, aktualisierte Objektmatrix (R₂) zu erhalten, indem für jedes Objekt sämtliche nicht zugeordneten Objekte aufgenommen werden, mit denen das genannte Objekt verbunden werden kann, oder sämtliche bereits zugeordneten Objekte, mit denen das genannte Objekt vorübergehend nicht verbunden werden kann, sowie Lösungen, die die Verbindung mit diesen Objekten ermöglichen.

2. Vorrichtung zur Verwaltung von Verbindungen gemäß Anspruch 1, **dadurch gekennzeichnet, dass** die Mittel zur Aktualisierung der neuen Matrix (R₂) Mittel zur Ermittlung von Lösungen zur Erstellung von Verbindungen umfassen, wobei diese Mittel Operationen zur Trennung erstellter Verbindungen und/oder zur Neuzuordnung einer oder mehrerer erstellter Verbindungen und zur Eintragung dieser Lösungen für das betreffende Objekt umsetzen.
